# EUROPEAN PATENT SPECIFICATION

(11) **EP 3 604 120 B1**
(45) Date of publication and mention of the grant of the patent: **26.01.2022**
(21) Application number: 18382583.5
(22) Date of filing: 01.08.2018
(51) Int. Cl.: B64C 1/26, B64C 5/02, B64C 1/00

(54) **FITTING FOR ATTACHING THE HORIZONTAL TAIL STABILIZER OF AN AIRCRAFT**
BESCHLAG ZUR BEFESTIGUNG DES HORIZONTALEN HÖHENLEITWERKSTABILISATORS EINES FLUGZEUGS
FERRURE POUR FIXER LE STABILISATEUR D'EMPENNAGE HORIZONTAL D'UN AÉRONEF

(43) Date of publication of application: 05.02.2020
(73) Proprietor: Airbus Operations, S.L.U., 28906 Getafe (Madrid) (ES)
(72) Inventor: JURADO MEDINA, Manuel, 28906 Getafe (Madrid) (ES)
(74) Representative: Herrero & Asociados, S.L.

(56) References cited:
- EP-A1- 2 605 959
- EP-A1- 3 095 691
- CN-A- 102 963 521
- US-A1- 2009 321 575
- US-A1- 2010 127 127
- US-A1- 2013 146 711
- US-A1- 2014 154 458

## Description

### Technical field of the invention

A first aspect of the present invention relates to a fitting for attaching the horizontal tail stabilizer of an aircraft and more particularly to fittings manufactured in composite, having application in the technical field of aeronautics, allowing to obtain a lighter component, without fatigue failure mode, thus allowing longer inspection intervals and with a significant reduction in the installation time.

The invention further relates to a horizontal tail plane of an aircraft comprising a fitting according to the invention, as well as to an aircraft comprising such horizontal tail plane.

A second aspect of the present invention relates to a process for obtaining a fitting according to the first aspect of the invention.

### Background of the invention

Nowadays, it is known the use of composites, such as the CFRP (Carbon Fiber Reinforced Plastic), in a large number of components of an aircraft. Such components are lighter than aluminum, although their manufacture is complex, making them more expensive than aluminum components.

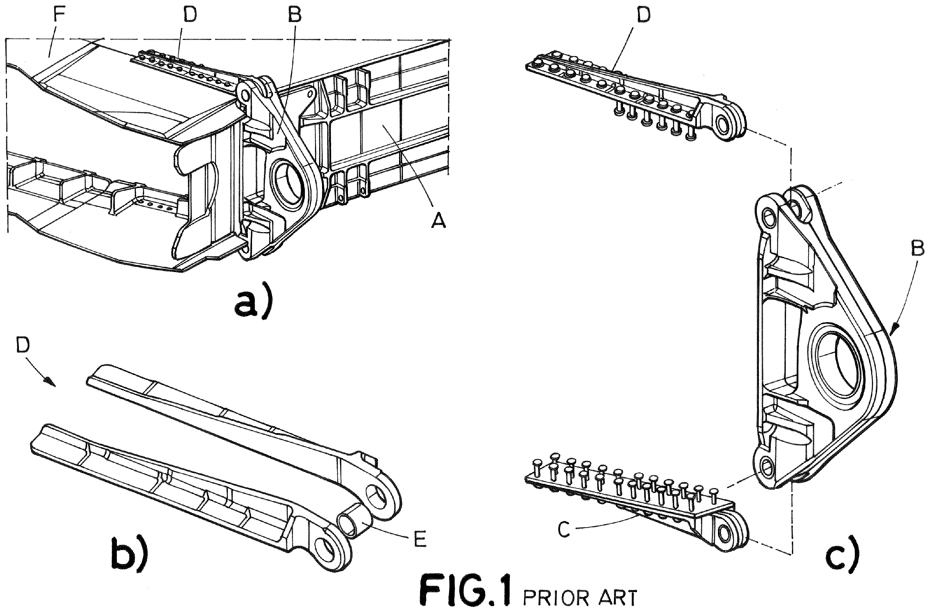

For that reason the fittings used for attaching horizontal tail stabilizers are produced with metallic materials. As represented in figure 1, fittings for attaching the pivoting horizontal stabilizers, not shown, to the rear surface (A) of the horizontal tail plane, hereinafter "the HTP", comprise a rear support (B) having a triangular configuration whose inner edge contacts the rear surface (A) of the HTP. Each of the ends of the rear support (B) close to the rear surface (A) are respectively connected to a lower (C) and an upper support (D) fitting by means of bolts, self-block nuts and bushings (E). The lower (C) and upper supports (D) are configured to contact each of the lower and upper main surfaces (F) of the HTP.

Nevertheless, metallic fittings have several drawbacks to be taken into account. First of all, metallic fittings have problems of cracks and fatigue, therefore, in the particular case of HTP pivot fittings a lot of fittings assembled is necessary, which leads to a complex and expensive installation.

Furthermore, given the installation method of a metallic fitting as represented in figure 1, it can only be mounted during manufacturing of the airplane, thus, such fitting cannot be installed in an already manufactured aircraft.

### Description of the invention

A first aspect of the present invention relates to a fitting for attaching the horizontal tail stabilizer of an aircraft as defined by claim 1. The invention overcomes the above mentioned drawbacks.

It is an object of the invention to provide a fitting that allows to be installed not only during the production of the aircraft but also in an already manufactured aircraft given that the installation takes place by the outer external side of the HTP. Further to that mounting option, the installation of fasteners can be made through the manholes of interior access.

Furthermore, it is an object of the invention to provide a fitting resistant to cracks and fatigue, at a reduced cost. Composite carbon fiber fittings have not fatigue failure mode and inspection intervals are longer, with benefits for airlines.

Another object of the invention is to provide a lighter fitting. Composite carbon fiber fitting are lighter than metal fitting. For HTP pivot fittings only one fitting is installed with reduction installation time.

According to the invention, a fitting of composite material for attaching the horizontal tail stabilizer of an aircraft comprises:
▪ a planar core piece having a uniform thickness, the core piece having a U configuration, according to a plan view, thereby being composed by two opposing lateral areas and a central area located between and interconnecting the lateral areas, said areas defining an inner edge of the core piece,
▪ at least one central reinforcement having a uniform thickness and comprising a planar part comprising a face which is joined to one face of the central area and a flange extending from the plane of the planar part of the central reinforcement and located in alignment with the inner edge of the core piece,
▪ at least two lateral reinforcements having a uniform thickness and each lateral reinforcement comprising a planar part comprising a face which is joined to one face of each of the opposing lateral areas and a flange extending from the plane of the planar part of the lateral reinforcement and located in alignment with the inner edge of the core piece.

The fitting is suitable for being obtained as one single integral or unitary piece. According to a preferred embodiment, the core piece and the reinforcements are made of carbon fiber reinforced composite.

A second aspect of the present invention relates to a process for obtaining a fitting as defined above, the process comprising:
a) cutting a core piece, at least one central reinforcement and at least two lateral reinforcements from a carbon fiber tape,
b) folding flanges of the reinforcements in press forming step,
c) arranging the reinforcements in side contact with the core piece into a mould to conform a final geometry and ensure a step of co-curing in autoclave, thus obtaining a unitary piece.

### Brief description of the drawings

For a better comprehension of the invention, the following drawings are provided for illustrative and non-limiting purposes, wherein:
Figure 1 shows a metallic fitting of the state of the art; view a) shows a perspective view of the fitting installed in the rear surface of the HTP, view b) shows a perspective view of the two independent elements forming the upper support, together with a bushing, and view c) shows an exploded view of the metallic fitting.
Figure 2 shows a perspective view of a fitting according to the invention installed in the rear surface of the HTP.
Figure 3 shows a perspective view of the fitting from the side configured to be in contact with the HTP.
Figure 4 schematically shows a plan view of the components forming the fitting of the invention when cut from laminated rectangular stacking raw plate and prior to be folded and co-cured together forming a unitary piece.

### Preferred embodiment of the invention

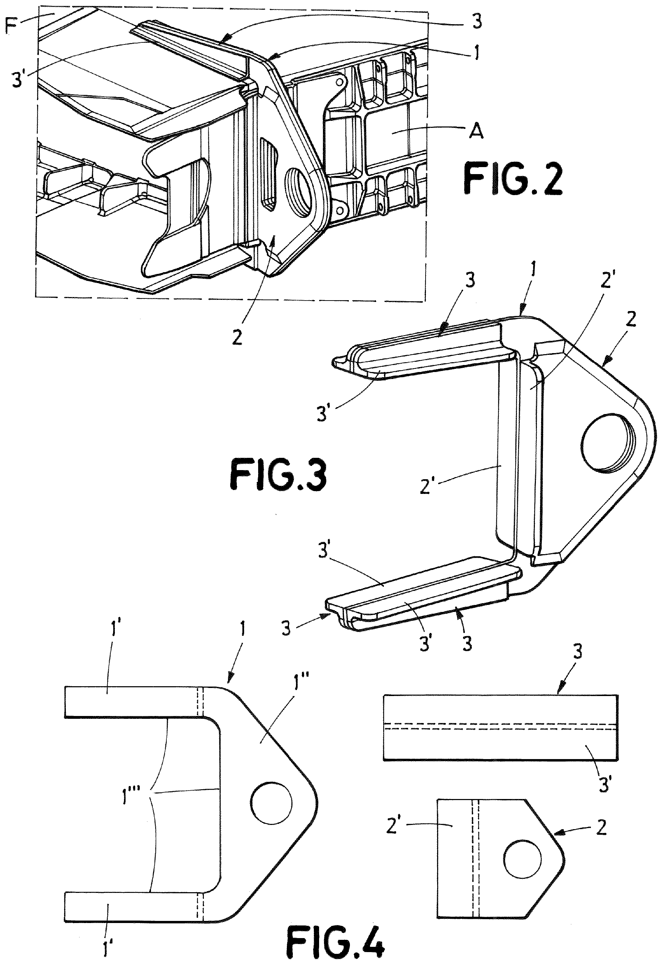

In a preferred embodiment of the invention, shown in figures 2-4, the fitting for attaching the horizontal tail stabilizer of an aircraft comprises reinforcements according to claim 1 and applied according to the process of claim 8 on either of its sides, and therefore comprises:
- a core piece (1) obtained from fiber tape having a regular thickness, the core piece (1) having U configuration, according to a plan view, thereby being composed by two lateral areas (1') and a central area (1") located between the lateral areas (1'),
- two central reinforcements (2), joined at both sides of the central area (1") of the core piece (1), obtained from a tape having a regular thickness and joined to one side of the central area (1"). Each central reinforcement (2) comprises a flange (2') located in an inner edge (1‴) of the core piece (1), the geometry of the joined area of the at least one central reinforcement (2) being similar to, i. e. such as, the geometry of the central area (1") of the core piece (1), preferably not exceeding its perimeter,
- four lateral reinforcements (3), joined at both sides of each lateral area (1') of the core piece (1), obtained from a tape having a regular thickness and each lateral reinforcement (3) being joined to one side of a different lateral area (1') and comprising a flange (3') located in the inner edge (1‴) of the core piece (1), the geometry of the joined area of each lateral reinforcement (3) being such as the geometry of the lateral area (1') of the core piece (1), preferably not exceeding its perimeter.

The core piece (1) and the reinforcements (2, 3) are made of carbon fiber reinforced composite.

The reinforcements (2, 3) are joined to the core piece (1) by co-curing in autoclave, thus obtaining a unitary single piece.

The core piece (1) and the reinforcements (2, 3) are obtained by cutting one composite carbon fiber tape, thereby having the same thickness.

The flanges (2', 3') are obtained by folding the reinforcements (2, 3) cut from at least one tape.

The flange (2') of each central reinforcement (2) is oriented so as to allow the contact with a rear surface (A) of a horizontal tail plane, i.e. perpendicular to the plane of the tape forming the core piece (1). The flange (3') of each lateral reinforcement (3) is oriented so as to allow the contact with a main surface (F) of the horizontal tail plane, i.e. configured to contact the upper and lower surfaces of the HTP.

Preferably the central area (1") and the joined area of the central reinforcement (2) have a triangular configuration.

Furthermore, according to a preferred embodiment, lateral areas (1') and the lateral reinforcements (3) decreases in width upon their ends.

As represented in figures 2-4, the central area (1") and the central reinforcement have corresponding holes for the function of the fitting.

## Claims

1. Fitting of composite material for attaching the horizontal tail stabilizer of an aircraft, **characterized in that** it comprises:
- a planar core piece (1) having a uniform thickness, the core piece (1) having a U configuration, according to a plan view, thereby being composed by two opposing lateral areas (1') and a central area (1") located between and interconnecting the lateral areas (1'), said areas defining an inner edge (1‴) of the core piece (1),
- at least one central reinforcement (2) having a uniform thickness and comprising a planar part comprising a face which is joined to one face of the central area (1") and a flange (2') extending from the plane of the planar part of the central reinforcement (2) and located in alignment with the inner edge (1‴) of the core piece (1),
- at least two lateral reinforcements (3) having a uniform thickness and each lateral reinforcement (3) comprising a planar part comprising a face which is joined to one face of each of the opposing lateral areas (1') and a flange (3') extending from the plane of the planar part of the lateral reinforcement (3) and located in alignment with the inner edge (1‴) of the core piece (1).

2. Fitting according to claim 1, wherein the core piece (1) is made from fiber tape

3. Fitting according to any of claims 1 and 2, wherein the at least one central reinforcement (2) is made from a fiber tape and the geometric contour shape of the joined area of the at least one central reinforcement (2) being such as the geometric contour shape of the central area (1") of the core piece (1).

4. Fitting according to any of the preceding claims wherein the at least two lateral reinforcements (3) are made from a fiber tape and the geometric contour shape of the joined area of each lateral reinforcement (3) being such as the geometric contour shape of the lateral area (1') of the core piece (1).

5. Fitting according to any of the preceding claims, wherein the flange (2') of the at least one central reinforcement (2) is oriented so as to allow the contact with a rear surface (A) of a horizontal tail plane, and the flange (3') of each lateral reinforcement (3) is oriented so as to allow the contact with a main surface (F) of the horizontal tail plane.

6. Horizontal tail plane of an aircraft comprising a fitting according to any of the preceding claims.

7. Aircraft comprising a horizontal tail plane according to the preceding claim.

8. A process for obtaining a fitting according to any of claims 1-5, comprising:
a) cutting a core piece (1), at least one central reinforcement (2) and at least two lateral reinforcements (3) from a carbon fiber tape,
b) folding flanges (2', 3') of the reinforcements (2, 3) in press forming step,
c) arranging the reinforcements (2, 3) in side contact with the core piece (1) into a mould to conform a final geometry and ensure a step of co-curing in autoclave, thus obtaining a unitary piece.

9. The process according to claim 8, wherein the flanges (2', 3') are obtained by folding the reinforcements (2, 3) cut from at least one fiber tape.

## Patentansprüche

1. Formstück aus Verbundwerkstoff zum Befestigen des Höhenleitwerkstabilisators eines Luftfahrzeugs, **dadurch gekennzeichnet, dass** es Folgendes aufweist:
- ein planes Kernstück (1), das eine einheitliche Dicke hat, wobei das Kernstück (1) gemäß einer Draufsicht eine U-Konfiguration hat, wobei es dabei aus zwei gegenüberliegenden Seitenbereichen (1') und einem Mittelbereich (1") besteht, der zwischen den Seitenbereichen (1') angeordnet ist und diese miteinander verbindet, wobei die Bereiche einen Innenrand (1‴) des Kernstücks (1) definieren,
- mindestens eine Mittelverstärkung (2), die eine einheitliche Dicke hat und einen planen Teil, der eine Fläche aufweist, die mit einer Fläche des Mittelbereichs (1") verbunden ist, sowie einen Flansch (2') aufweist, der sich von der Ebene des planen Teils der Mittelverstärkung (2) erstreckt und mit dem Innenrand (1‴) des Kernstücks (1) in einer Flucht angeordnet ist,
- mindestens zwei Seitenverstärkungen (3), die eine einheitliche Dicke haben, und wobei jede Seitenverstärkung (3) einen planen Teil, der eine Fläche aufweist, die mit einer Fläche von jedem der gegenüberliegenden Seitenbereiche (1') verbunden ist, und einen Flansch (3') aufweist, der sich von der Ebene des planen Teils der Seitenverstärkung (3) erstreckt und mit dem Innenrand (1‴) des Kernstücks (1) in einer Flucht angeordnet ist.

2. Formstück nach Anspruch 1, wobei das Kernstück (1) aus einem Faserband gefertigt ist.

3. Formstück nach einem der Ansprüche 1 und 2, wobei die mindestens eine Mittelverstärkung (2) aus einem Faserband gefertigt ist, und wobei die geometrische Konturform des verbundenen Bereichs der mindestens einen Mittelverstärkung (2) wie die geometrische Konturform des Mittelbereichs (1") des Kernstücks (1) ist.

4. Formstück nach einem der vorstehenden Ansprüche, wobei die mindestens zwei Seitenverstärkungen (3) aus einem Faserband gefertigt sind, und wobei die geometrische Konturform des verbundenen Bereichs von jeder Seitenverstärkung (3) wie die geometrische Konturform des Seitenbereichs (1') des Kernstücks (1) ist.

5. Formstück nach einem der vorstehenden Ansprüche, wobei der Flansch (2') der mindestens einen Mittelverstärkung (2) ausgerichtet ist, um den Kontakt mit einer Heckfläche (A) einer Höhenleitwerksfläche zu ermöglichen, und der Flansch (3') von jeder Seitenverstärkung (3) ausgerichtet ist, um den Kontakt mit einer Hauptfläche (F) der Höhenleitwerksfläche zu ermöglichen.

6. Höhenleitwerksfläche eines Luftfahrzeugs mit einem Formstück nach einem der vorstehenden Ansprüche.

7. Luftfahrzeug mit einer Höhenleitwerksfläche nach dem vorstehenden Anspruch.

8. Verfahren zum Erlangen eines Formstücks nach einem der Ansprüche 1 bis 5, mit:
a) einem Schneiden eines Kernstücks (1), mindestens einer Mittelverstärkung (2) und mindestens zweier Seitenverstärkungen (3) aus einem Kohlefaserband,
b) einem Falten von Flanschen (2', 3') der Verstärkungen (2, 3) in einem Form pressschritt,
c) einem Anordnen der Verstärkungen (2, 3) in einem Seitenkontakt mit dem Kernstück (1) in einer Form, um mit einer endgültigen Geometrie übereinzustimmen, und einen Schritt eines Ko-Aushärtens in einem Autoklav sicherzustellen, wobei somit ein einheitliches Stück erlangt wird.

9. Verfahren nach Anspruch 8, wobei die Flansche (2', 3') erlangt werden, indem die Verstärkungen (2, 3) gefaltet werden, die aus mindestens einem Faserband geschnitten werden.

## Revendications

1. Fixation en matériau composite pour fixer le stabilisateur d'empennage horizontal d'un aéronef, **caractérisée en ce qu'**elle comprend :
- une pièce principale plane (1) ayant une épaisseur uniforme, la pièce principale (1) ayant une configuration en U, selon une vue en plan, et étant ainsi composée de deux zones latérales opposées (1') et d'une zone centrale (1") située entre et interconnectant les zones latérales (1'), lesdites zones définissant un bord intérieur (1‴) de la pièce principale (1),
- au moins un renfort central (2) ayant une épaisseur uniforme et comprenant une partie plane comprenant une face qui est jointe à une face de la zone centrale (1") et une bride (2') s'étendant à partir du plan de la partie plane du renfort central (2) et située en alignement avec le bord intérieur (1‴) de la pièce principale (1),
- au moins deux renforts latéraux (3) ayant une épaisseur uniforme et chaque renfort latéral (3) comprenant une partie plane comprenant une face qui est jointe à une face de chacune des zones latérales opposées (1') et une bride (3') s'étendant à partir du plan de la partie plane du renfort latéral (3) et située en alignement avec le bord intérieur (1‴) de la pièce principale (1).

2. Fixation selon la revendication 1, dans laquelle la pièce principale (1) est faite d'un ruban de fibres.

3. Fixation selon l'une quelconque des revendications 1 et 2, dans laquelle ledit au moins un renfort central (2) est fait d'un ruban de fibres, la forme de contour géométrique de la zone jointe dudit au moins un renfort central (2) étant comme la forme de contour géométrique de la zone centrale (1") de la pièce principale (1).

4. Fixation selon l'une quelconque des revendications précédentes, dans laquelle lesdits au moins deux renforts latéraux (3) sont faits d'un ruban de fibres, la forme de contour géométrique de la zone jointe de chaque renfort latéral (3) étant comme la forme de contour géométrique de la zone latérale (1') de la pièce principale (1).

5. Fixation selon l'une quelconque des revendications précédentes, dans laquelle la bride (2') dudit au moins un renfort central (2) est orientée de manière à permettre le contact avec une surface arrière (A) d'un plan d'empennage horizontal, et la bride (3') de chaque renfort latéral (3) est orientée de manière à permettre le contact avec une surface principale (F) du plan d'empennage horizontal.

6. Plan d'empennage horizontal d'un aéronef comprenant une fixation selon l'une quelconque des revendications précédentes.

7. Aéronef comprenant un plan d'empennage horizontal selon la revendication précédente.

8. Procédé d'obtention d'une fixation selon l'une quelconque des revendications 1 à 5, comprenant :
a) la découpe d'une pièce principale (1), d'au moins un renfort central (2) et d'au moins deux renforts latéraux (3) dans un ruban de fibres de carbone ;
b) le pliage des brides (2', 3') des renforts (2, 3) dans une étape de formage sous pression,
c) l'agencement des renforts (2, 3) en contact latéral avec la pièce principale (1) dans un moule pour se conformer à une géométrie finale et assurer une étape de co-durcissement en autoclave, et obtenir ainsi une pièce unitaire.

9. Procédé selon la revendication 8, dans lequel les brides (2', 3') sont obtenues en pliant les renforts (2, 3) découpés dans au moins un ruban de fibres.
